# EUROPEAN PATENT APPLICATION

(11) **EP 4 742 027 A1**
(43) Date of publication of application: **13.05.2026**
(21) Application number: 24866962.4
(22) Date of filing: 20.06.2024
(51) Int. Cl.: G06F 3/14

(54) **SCREEN MIRRORING METHOD AND APPARATUS, AND ELECTRONIC DEVICE**

(30) Priority: 19.09.2023 CN 202311215613
(71) Applicant: Huawei Technologies Co., Ltd., Shenzhen, Guangdong 518129 (CN)
(72) Inventor: HU, Yu, Shenzhen, Guangdong 518129 (CN); XU, Liang, Shenzhen, Guangdong 518129 (CN)
(74) Representative: Körber, Martin Hans
(86) International application number: PCT/CN2024/100478
(87) International publication number: WO 2025/060543

(57) **Abstract**

This application relates to the field of electronic device technologies, and discloses a projection method and apparatus, and an electronic device, to implement simultaneous multi-screen viewing during different-source projection. The method is applied to a projection system, and includes: A first electronic device creates a first virtual display in response to a projection operation performed by a user on an application, and generates a user interface of the application on the first virtual display; and when projecting the user interface that is of the application and that is generated on the first virtual display onto a second electronic device, the first electronic device copies the user interface generated on the first virtual display to a display of the first electronic device for displaying, to implement simultaneous multi-screen viewing on the first electronic device and the second electronic device.

## Description

### CROSS-REFERENCE TO RELATED APPLICATIONS

This application claims priority to Chinese Patent Application No. 202311215613.2, filed with the China National Intellectual Property Administration on September 19, 2023 and entitled "PROJECTION METHOD AND APPARATUS, AND ELECTRONIC DEVICE", which is incorporated herein by reference in its entirety.

### TECHNICAL FIELD

Embodiments of this application relate to the field of electronic device technologies, and in particular, to a projection method and apparatus, and an electronic device.

### BACKGROUND

As life and technology evolve, application of projection technologies is becoming increasingly widespread. The projection technology means that an electronic device may project a display interface of a display of the electronic device onto another electronic device for displaying. For example, a movie on a mobile phone may be projected onto a computer for playing, and a video on a central display screen of a head unit may be projected onto a tablet computer for displaying.

However, when a first electronic device performs different-source projection on a second electronic device, a projection interface is displayed on only the second electronic device, but is not displayed on the first electronic device, affecting user experience.

### SUMMARY

Embodiments of this application provide a projection method and apparatus, and an electronic device, to implement simultaneous multi-screen viewing during different-source projection and reduce power consumption.

According to a first aspect, an embodiment of this application provides a projection method, and the method is applied to a projection system. The projection system includes a first electronic device and a second electronic device. The method includes:

The first electronic device may create a first virtual display in response to a projection operation performed by a user on an application. After generating a user interface of the application on the created first virtual display, the first electronic device sends projection data to the second electronic device, and copies the user interface generated on the first virtual display to a display of the first electronic device for displaying. The projection data includes the user interface that is of the application and that is generated on the first virtual display.

In the method, the first electronic device creates the first virtual display in response to the projection operation performed by the user on the application, and generates the user interface of the projected application on the first virtual display. The first electronic device may send, to the second electronic device, the projection data that is included on the user interface displayed on the first virtual display, and may further copy the user interface generated on the first virtual display to the display of the first electronic device for displaying, to implement simultaneous multi-screen viewing on the first electronic device and the second electronic device. In addition, in an implementation process, the first electronic device creates only the first virtual display. Compared with a similar solution of creating a plurality of virtual displays, this reduces projection power consumption.

In an optional design, in response to the projection operation, the first electronic device creates the first virtual display based on a screen parameter of the display of the first electronic device.

In this design, the first virtual display created by the first electronic device has exactly the same screen parameter as the display of the first electronic device. In this way, the user interface generated on the first virtual display can be directly copied to the display of the first electronic device for displaying, thereby achieving an objective of reducing power consumption.

In an optional design, the first electronic device generates identification information of the first virtual display, and establishes a mapping relationship between the identification information and the application.

In this design, the first electronic device establishes the mapping relationship between the identification information of the first virtual display and the application, so that a data basis can be provided for the first electronic device to determine the first virtual display on which the user interface of the application is generated. In this way, the first electronic device can quickly determine, based on the mapping relationship, the first virtual display on which the user interface is generated for layer copying, and display the user interface on the display of the first electronic device, thereby improving interface display efficiency.

In an optional design, the first electronic device may further generate the projection data based on the user interface generated on the first virtual display, and send the projection data to the second electronic device. The projection data is used by the second electronic device to display the user interface of the application in a projection window.

In this design, the first electronic device can complete different-source projection, and project the user interface of the application of the first electronic device onto the second electronic device for displaying, to play the user interface of the application on the second electronic device.

In an optional design, the first electronic device obtains layer data of the user interface generated on the first virtual display. The first electronic device performs layer synthesis on the layer data to obtain image data. The first electronic device encodes the image data to obtain the projection data.

In this design, the first electronic device can obtain the user interface of the application from the first virtual display in real time, and generate, based on the user interface, the projection data to be sent to the second electronic device, so that the second electronic device can display the user interface on the display based on the received projection data. In this way, the second electronic device can synchronously play the application, thereby implementing simultaneous multi-screen viewing.

In an optional design, the first electronic device creates a native window, where the native window is used to display the user interface of the application on the display of the first electronic device. The first electronic device may further copy the user interface generated on the first virtual display to the native window, and display the user interface in the native window.

In this design, in a projection process, the first electronic device can copy the user interface generated on the first virtual display to a local native window, and display the user interface in the native window, so that the first electronic device can further display the user interface on the display of the first electronic device during different-source projection, to implement simultaneous viewing of applications of the first electronic device and the second electronic device, thereby improving user experience.

In an optional design, after creating the native window, the first electronic device may further determine, based on the mapping relationship between the identification information of the first virtual display and the application, the first virtual display on which the user interface of the application is generated.

In this design, the first electronic device can quickly and accurately determine the first virtual display on which the user interface of the application is generated, and perform layer copying on the user interface of the first virtual display, to achieve an objective of displaying the user interface on the display of the first electronic device, thereby improving accuracy and efficiency of locally displaying the user interface.

In an optional design, the first electronic device performs layer copying on the user interface generated on the first virtual display, to obtain the layer data of the user interface. The first electronic device performs layer synthesis on the layer data to obtain image data. The first electronic device displays the user interface in the native window based on the image data.

In this design, the first electronic device can copy the user interface generated on the first virtual display to the native window for displaying, to locally display the user interface during different-source projection, thereby implementing synchronous playing of an application on the first electronic device and the second electronic device.

In an optional design, after detecting the projection operation triggered by the user for the application, the first electronic device may further determine that the first electronic device and the second electronic device display the user interface of the application.

In this design, the user can autonomously select whether the application is separately displayed on the first electronic device and the second electronic device or synchronously played on the first electronic device and the second electronic device. The first electronic device may determine whether the user interface of the application needs to be displayed on both the second electronic device and the first electronic device. This can improve projection flexibility and user experience.

According to a second aspect, this application provides a projection apparatus, used in a first electronic device, where the projection apparatus includes:
a display, configured to display a user interface;
a communication unit, configured to: receive and send data; and
a processing unit, configured to: create a first virtual display in response to a projection operation performed by a user on an application, and generate a user interface of the application on the first virtual display; send projection data to a second electronic device, where the projection data is included on the user interface that is of the application and that is generated on the first virtual display; and copy the user interface generated on the first virtual display to the display of the first electronic device for displaying.

According to a third aspect, this application provides an electronic device, including a display, one or more processors, and one or more memories. The display is configured to display a user interface, the one or more memories are configured to store one or more computer programs and data information, and the one or more processors are configured to execute the computer programs stored in the one or more memories, to cause the electronic device to perform the method in any implementation of the first aspect. The electronic device may be the first electronic device in the first aspect.

According to a fourth aspect, this application provides a computer-readable storage medium. The computer-readable storage medium stores a computer program or instructions, and when the computer program or the instructions are executed by a compute device, the compute device performs the method in any one of the first aspect or any possible implementation of any aspect.

According to a fifth aspect, an embodiment of this application provides a chip. The chip is coupled to a memory in an electronic device, so that when operating, the chip invokes a computer program stored in the memory, to implement the method in any possible design of any one of the first aspect in embodiments of this application.

According to a sixth aspect, this application provides a computer program product. The computer program product includes a computer program or instructions, and when the computer program or the instructions are executed by a compute device, the compute device performs the method in any one of the first aspect or any possible implementation of any aspect.

### BRIEF DESCRIPTION OF DRAWINGS

FIG. 1 is a diagram of an architecture of a projection system;
FIG. 2 is a diagram of an example of a possible hardware structure of an electronic device according to this application;
FIG. 3 is a diagram of an example of a multi-screen collaboration scenario according to this application;
FIG. 4 is a schematic flowchart of a projection method according to this application;
FIG. 5 is a diagram of an application scenario of a projection method according to this application;
FIG. 6 is a diagram of a projection operation according to this application;
FIG. 7 is a diagram of a display interface according to this application;
FIG. 8 is a diagram of another projection operation according to this application;
FIG. 9 is a diagram of a structure of an operating system of a first electronic device according to this application;
FIG. 10 is a diagram of a projection scenario according to this application;
FIG. 11 is a diagram of a structure of a second electronic device according to this application;
FIG. 12 is a diagram of a projection use case according to this application;
FIG. 13 is a diagram of a specific projection use case according to this application;
FIG. 14 is a diagram of an architecture of a projection system according to this application;
FIG. 15A and FIG. 15B are a schematic flowchart of an example of a projection method according to this application;
FIG. 16A and FIG. 16B are a complete schematic flowchart of a projection method according to this application; and
FIG. 17 is a diagram of a structure of a projection apparatus according to this application.

### DESCRIPTION OF EMBODIMENTS

The following describes the technical solutions in embodiments of this application in detail with reference to the accompanying drawings in embodiments of this application.

The following first describes related concepts in embodiments of this application.
(1) An application (application, app) is a software program that can implement one or more specific functions. The application in this embodiment is a software program that can provide a user interface. Usually, a plurality of applications may be installed on an electronic device, for example, a camera application, a messaging application, an image application, various mailbox applications, instant messaging software, or a video application. The application mentioned in the following may be an application installed when the electronic device is delivered from a factory, or may be an application downloaded by a user through a network or obtained from another electronic device during use of the electronic device (for example, an application sent by another electronic device).
(2) A virtual display (virtual display, VD) is a system component created in an operating system of an electronic device and used to perform a related function like screen recording. A user interface of an application may run on the system component without being displayed to a user. A developer can control VD creation and destruction by using an operating system interface. The operating system provides system capabilities such as VD creation, destruction, screen recording, and mapping. The developer is a developer of the operating system. In this embodiment of this application, the virtual display is defined as a virtual screen in Chinese, or the virtual display may be defined as virtual display screen. This is not limited herein.

In some examples, the developer may set a trigger condition for VD creation, destruction, screen recording, and mapping by using the operating system interface. For example, when the user triggers a projection operation on the electronic device, the electronic device may create a system component as a virtual display in response to the projection operation triggered by the user. When the user ends the projection operation, the electronic device may destroy the virtual display.

After creating the virtual display, the electronic device may generate the user interface of the application on the virtual display. The user interface exists in a form of code, and the virtual display cannot display the user interface to the user. For example, when the electronic device projects the user interface of the virtual display onto another electronic device, in a projection process, the electronic device identifies the system component of the virtual display as a screen that displays the user interface. The user interface of the virtual display is not displayed to the user.

(3) A display manager service (display manager service, DMS) is used to perform display management, and is responsible for management of a display device in a system, including management of all local displays (namely, all displays of an electronic device) and virtual displays.

(4) An activity manager service (activity manager service, AMS) is used to manage task running.

(5) A window manager service (window manager service, WMS) is used to manage windows. Specifically, it is used to calculate a position, a size, and a hierarchy of each application layer in the entire layer stack.

(6) A different-source projection means that an electronic device projects a user interface of an application installed on the electronic device onto another electronic device for displaying.

In embodiments of this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit sizes, content, an order, a time sequence, priorities, importance, or the like of the plurality of objects. For example, a second file and a second file are merely used to distinguish between different files, but do not indicate different sizes, content, priorities, importance, or the like of the two files.

The following describes in detail embodiments of this application with reference to the accompanying drawings.

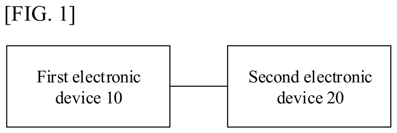

FIG. 1 is a diagram of an architecture of a projection system to which a method according to an embodiment of this application is applicable. Specifically, the projection system includes a first electronic device 10 and a second electronic device 20. The first electronic device 10 and the second electronic device 20 may communicate with each other through a communication network.

The communication network may be a local area network or a wide area network relayed by using a relay (relay) device. When the communication network is a local area network, for example, the communication network may be a short-range communication network like a Wi-Fi hotspot network, a Wi-Fi direct network, a Bluetooth network, a ZigBee network, or a near field communication (near field communication, NFC) network. When the communication network is a wide area network, for example, the communication network may be the 3rd generation wireless telephone technology (3rd generation wireless telephone technology, 3G) network, the 4th generation mobile communication technology (the 4th generation mobile communication technology, 4G) network, the 5th generation mobile communication technology (5th generation mobile communication technology, 5G) network, a future evolved public land mobile network (public land mobile network, PLMN), or the Internet.

The first electronic device 10 is a device that actively shares an interface of a system or an interface of an application, namely, an electronic device that performs projection. For example, the first electronic device 10 may be a mobile phone, a tablet computer, a notebook computer, a head unit device, or the like. The second electronic device 20 is a device that passively receives an interface shared by the first electronic device 10, namely, an electronic device that displays a projection window. For example, the second electronic device 20 may be a mobile phone, a tablet computer, a notebook computer, or the like.

In some embodiments, the projection system may be a simultaneous multi-screen viewing system, the first electronic device 10 may be a primary device, and the second electronic device 20 may be a secondary device.

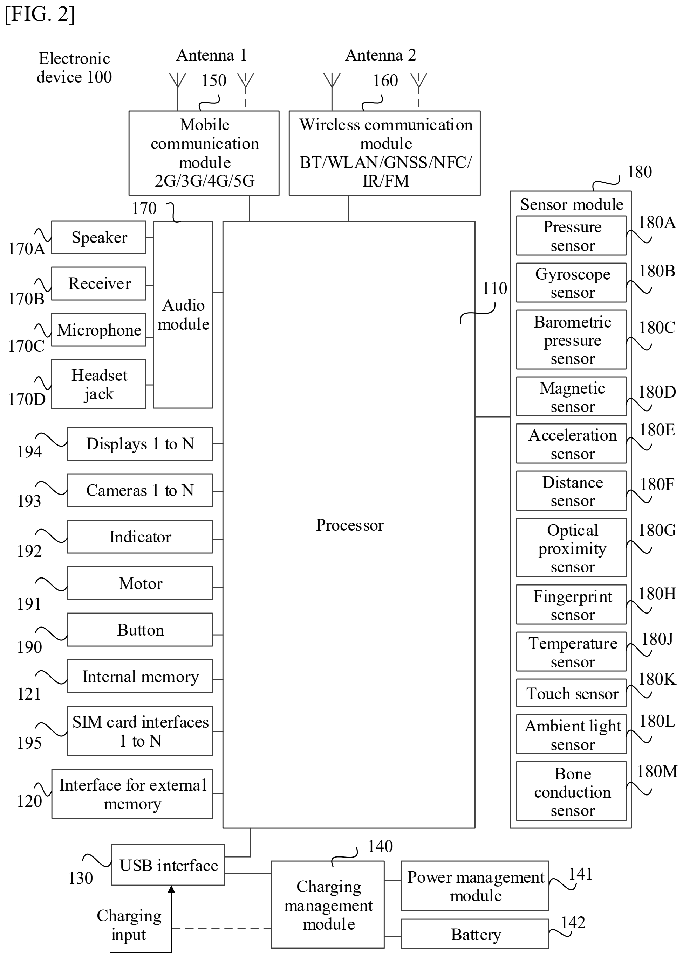

FIG. 2 is a diagram of a possible hardware structure of an electronic device. The electronic device 100 may be the first electronic device 10 in FIG. 1, or may be the second electronic device 20 in FIG. 1. As shown in FIG. 2, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a microcontroller unit (MCU), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on an instruction operation code and a timing signal, to complete control of instruction fetching and instruction execution. The memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In this embodiment of this application, the processor 110 may store one or more applications, in response to a projection operation performed by a user on the application, project a user interface of an application onto an electronic device being projected onto, and display the user interface on the display 194. In addition, the processor 110 may display the user interface on the display 194 based on projection data.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to exchange data between the electronic device 100 and a peripheral device. The charging management module 140 is configured to receive a charging input from a charger. The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to: transmit and receive an electromagnetic wave signal. Each antenna in the electronic device 100 may be used to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. In this embodiment of this application, the display 194 may be configured to display a home screen, an application interface, a granularity adjustment control, and the like.

The camera 193 is configured to capture a static image or a video. The camera 193 may include a front-facing camera and a rear-facing camera.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, software code of at least one application (such as Huawei Video and MeeTime), and the like. The data storage area may store data (for example, an image or a video) and the like that are generated during use of the electronic device 100. In addition, the internal memory 121 may include a high-speed random access memory, or may include a non-volatile memory, for example, at least one magnetic disk storage device, a flash memory device, or a universal flash storage (universal flash storage, UFS).

The interface 120 for external memory may be configured to connect to an external storage card, for example, a micro SD card, to expand a storage capability of the electronic device 100. The external storage card communicates with the processor 110 through the interface 120 for external memory, to implement a data storage function. For example, files such as pictures or videos are stored in the external memory card.

The electronic device 100 may implement an audio function, for example, music playing and recording, through the audio module 170, the speaker 170A, the receiver 170B, the microphone 170C, the headset jack 170D, the application processor, and the like.

It may be understood that the components shown in FIG. 2 do not constitute a specific limitation on the electronic device. The electronic device may further include more or fewer components than those shown in the figure, or a combination of some components, or splits from some components, or a different component layout. In the following embodiments, the electronic device 100 shown in FIG. 2 is used as an example for description.

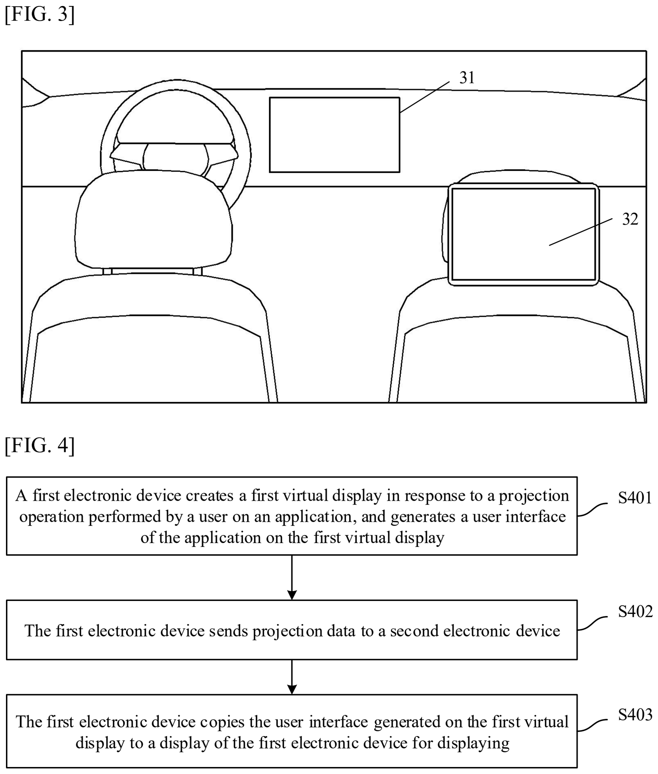

Based on the projection system shown in FIG. 1 and the electronic device shown in FIG. 2, this application provides an example of a simultaneous multi-screen viewing scenario, as shown in FIG. 3. The first electronic device 10 may be specifically a head unit device 31, and the second electronic device 20 may be specifically a tablet device 32. For example, the user may select, on a head unit central display screen of the head unit device 31, an application for sharing, and trigger a projection operation to project the application onto the tablet device 32. The head unit device 31 projects the application onto the tablet device 32 in response to the projection operation triggered by the user. However, a projection interface of the application is displayed on only the tablet device 32, but is not displayed on the head unit central display screen of the head unit device 31, which affects user experience.

Based on the foregoing problem, this application provides a projection method, to resolve a problem that a projection interface is displayed on only a projected device during different-source projection. In the method, a first electronic device may create a first virtual display in response to a projection operation triggered by a user for an application, and generate a user interface of the application on the first virtual display. The first electronic device sends, to a second electronic device, projection data included on the user interface that is of the application and that is generated on the first virtual display, and copies the user interface generated on the first virtual display to a display of the first electronic device for displaying. This can implement simultaneous multi-screen viewing on the second electronic device and the first electronic device, thereby improving user experience.

The following describes the projection method according to specific embodiments.

FIG. 4 is a schematic flowchart of a projection method according to an embodiment of this application. The procedure includes the following steps.

S401: The first electronic device creates the first virtual display in response to the projection operation performed by the user on the application, and generates the user interface of the application on the first virtual display.

The user may select, on a multi-screen management interface of the first electronic device, an application that needs to be projected, and trigger the projection operation. The projection operation may be a simultaneous multi-screen viewing operation. After detecting the projection operation triggered by the user for the application, the first electronic device determines that the first electronic device and the second electronic device display the user interface of the application. The first electronic device may further project the application onto the second electronic device in response to the projection operation triggered by the user, and copy the user interface to the display of the first electronic device for displaying.

The application is an application installed on the first electronic device, and may be specifically a video application, or may be another application, which is not limited herein.

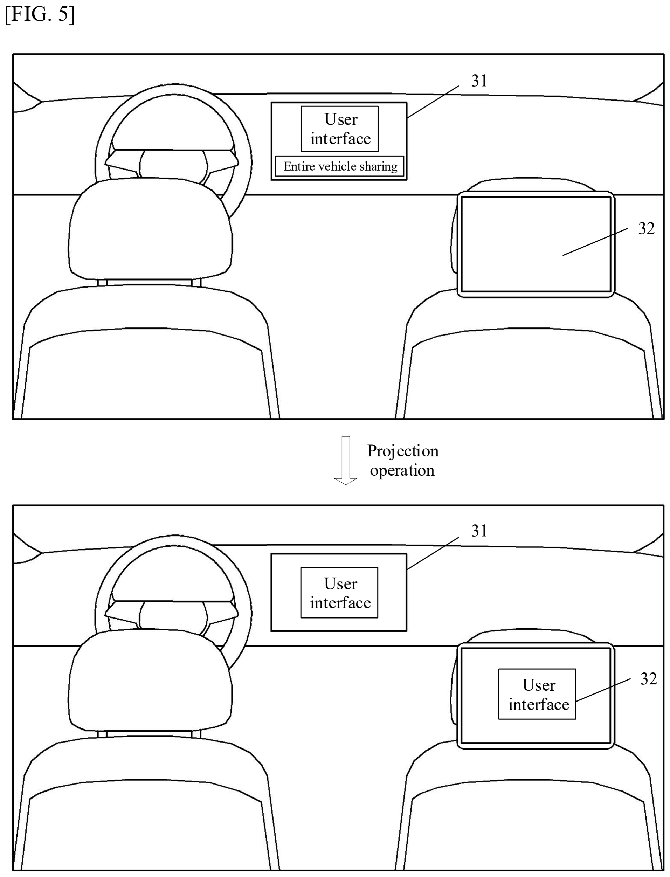

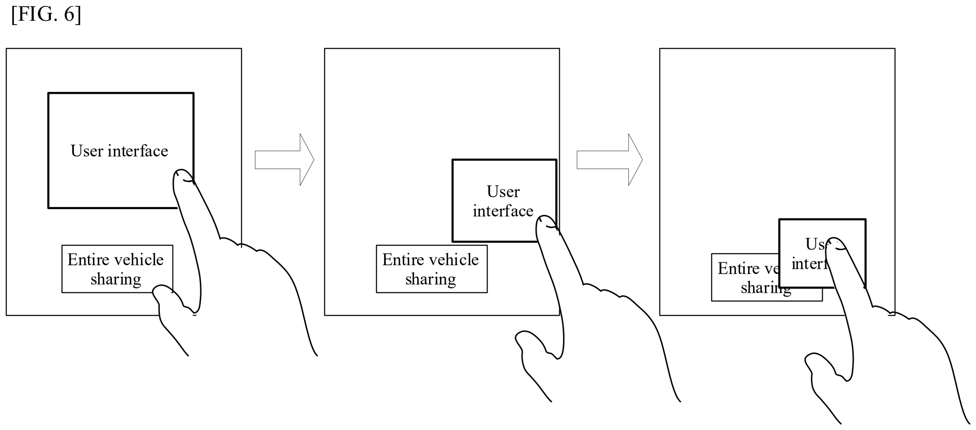

For example, as shown in FIG. 5, the first electronic device is a head unit device 31, and the second electronic device is an in-vehicle PAD (tablet computer) 32. The user may move, through an operation, the user interface displayed on a head unit central display screen of the head unit device 31 to an entire vehicle sharing area, to complete an operation of sharing the application to the in-vehicle PAD. For example, as shown in FIG. 6, the user interface and the entire vehicle sharing area are displayed on the head unit central display screen. The user may tap the user interface displayed on the head unit central display screen and drag it to the entire vehicle sharing area for sharing. The head unit device 31 creates the first virtual display in response to an application sharing operation triggered by the user, and generates the user interface of the application on the first virtual display. The head unit device 31 may encode the user interface generated on the first virtual display and perform displaying on the in-vehicle PAD 32. In addition, the head unit device 31 may copy the user interface generated on the first virtual display to a display of the head unit device 31 for displaying.

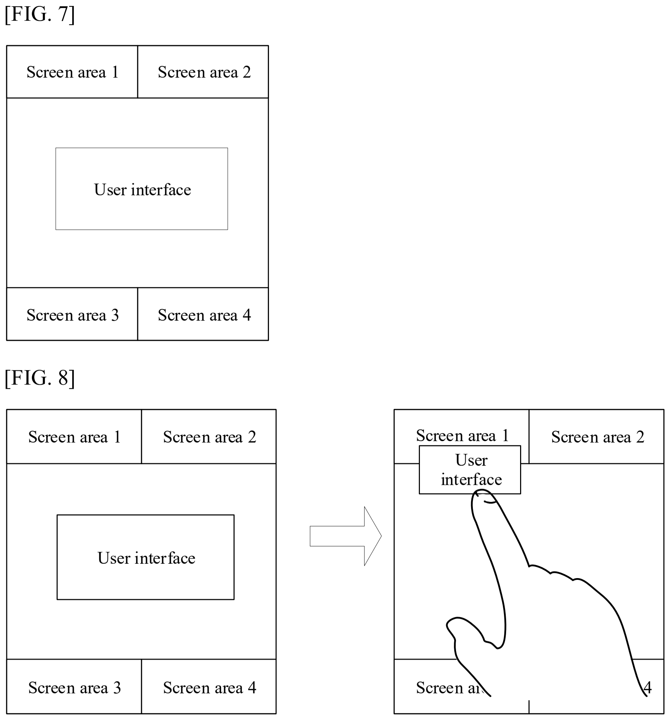

In some examples, a plurality of screen areas may be further displayed on the display of the first electronic device. Each screen area corresponds to a screen of one electronic device. For example, as shown in FIG. 7, four screen areas and the user interface of the application may be displayed on the display of the first electronic device. A screen area 1 corresponds to an electronic device 1, a screen area 2 corresponds to an electronic device 2, a screen area 3 corresponds to an electronic device 3, and a screen area 4 corresponds to an electronic device 4. The user may drag the user interface to a corresponding screen area, to achieve an objective of projecting the user interface onto a screen that is of an electronic device and that corresponds to the screen area. As shown in FIG. 8, the user may drag the user interface to the screen area 1, to achieve an objective of projecting the user interface onto the electronic device 1. In response to the projection operation triggered by the user, when displaying the user interface on the first electronic device, the first electronic device projects the user interface onto the electronic device 1 for displaying. For example, the first electronic device may be the head unit device 31, and each of the electronic device 1, the electronic device 2, the electronic device 3, and the electronic device 4 may be the in-vehicle PAD 32.

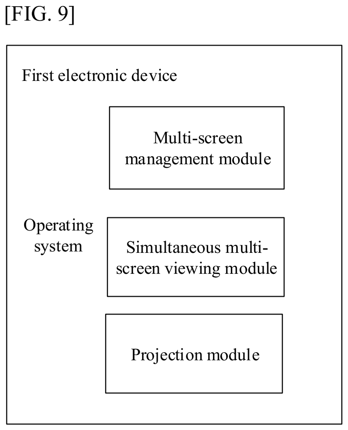

In some embodiments, as shown in FIG. 9, an operating system of the first electronic device may include a multi-screen management module, a simultaneous multi-screen viewing module, and a projection module. The first electronic device may use the multi-screen management module, the simultaneous multi-screen viewing module, and the projection module to achieve an objective of synchronously displaying, by the second electronic device and the first electronic device, the user interface of the projected application. A specific process is as follows:

After detecting the projection operation triggered by the user, the multi-screen management module of the first electronic device determines the second electronic device that synchronously displays the user interface of the application with the first electronic device, and sends a simultaneous viewing instruction to the simultaneous multi-screen viewing module. The simultaneous viewing instruction instructs the first electronic device and the second electronic device to simultaneously display the user interface of the application. The simultaneous viewing instruction may include the projected application and device information of the second electronic device onto which the application is projected. After receiving the simultaneous viewing instruction, the simultaneous multi-screen viewing module may initiate a different-source projection procedure to the projection module. The projection module creates the first virtual display in response to the projection operation triggered by the user, and generates the user interface of the application on the first virtual display.

The projection module of the first electronic device may create the first virtual display in the following manner:
After receiving a different-source projection instruction initiated by the simultaneous multi-screen viewing module, in response to the projection operation, the projection module may create a VD based on a screen parameter of the display of the first electronic device. The screen parameter includes but is not limited to: physical resolution, screen density, and landscape and portrait orientations of the display. For example, the projection module of the first electronic device may create a VD through a display manager service (display manager service, DMS).

When creating the first virtual display, the first electronic device may further create identification information of the first virtual display. The first electronic device may further establish a mapping relationship between the identification information and the application, so that the first electronic device may subsequently determine, based on the identification information, the virtual display on which the user interface of the application is generated.

The first electronic device may further migrate the application to the first virtual display, and run the application on the first virtual display.

After creating the first virtual display, the first electronic device migrates the application from the display of the first electronic device to the first virtual display, and generates the user interface of the application on the first virtual display. For example, the projection module of the first electronic device may migrate the application to the first virtual display through an AMS.

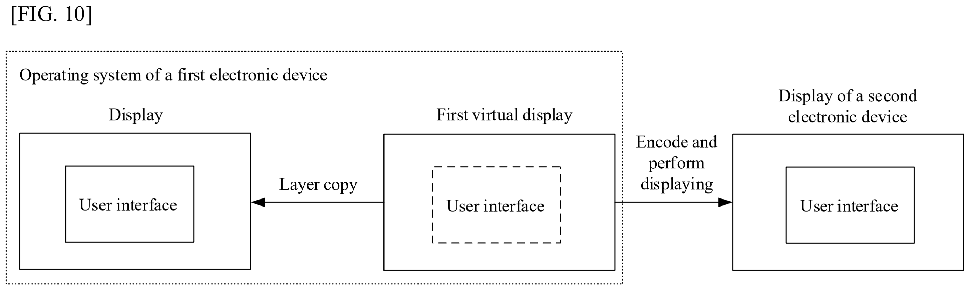

FIG. 10 is a diagram of a projection scenario according to an embodiment of this application. The first electronic device creates the first virtual display in response to the projection operation performed by the user on the application, migrates the application to the first virtual display, and generates the user interface of the application on the first virtual display. As shown in FIG. 10, the user interface of the application is displayed on the first virtual display. The user interface displayed on the first virtual display is not displayed on the display of the first electronic device.

S402: The first electronic device sends the projection data to the second electronic device. The projection data includes the user interface that is of the application and that is generated on the first virtual display.

In some embodiments, the first electronic device may perform synthetic encoding on the user interface generated on the first virtual display, to obtain the projection data.

The first electronic device may obtain layer data of the user interface generated on the first display, and perform layer synthesis on the layer data to obtain image data of the user interface.

The first electronic device may further encode the image data to obtain the projection data. The projection data is used by the second electronic device to display the user interface of the application in a projection window. For example, the projection data may be a video stream.

The first electronic device may send the projection data to the second electronic device through a network, so that the second electronic device displays the user interface of the application in the projection window based on the received projection data.

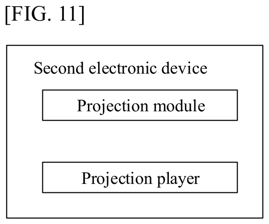

FIG. 9 continues to be used as an example. The projection module of the first electronic device may obtain the layer data of the user interface generated on the first virtual display, and perform layer synthesis on the layer data to obtain the image data. The projection module of the first electronic device may further encode the image data to obtain the projection data. The projection module of the first electronic device may further transmit the projection data to the second electronic device through the network. As shown in FIG. 11, the second electronic device may include a projection module and a projection player. The second electronic device may receive, by using the projection module, the projection data sent by the projection module of the first electronic device. In addition, the projection module of the second electronic device may decode the projection data to obtain the image data. The projection module of the second electronic device may send the image data to the projection player, and the projection player displays the user interface of the application in the projection window based on the received image data.

In some examples, after creating the first virtual display, the projection module of the first electronic device may establish a connection to the projection module of the second electronic device. After the connection is established between the projection module of the second electronic device and the projection module of the first electronic device, the projection window may be created by using the projection player of the second electronic device. After receiving the projection data, the projection module of the second electronic device may inject the received projection data into surfaceview of the projection window. The projection player of the second electronic device displays the user interface in the projection window.

S403: The first electronic device copies the user interface generated on the first virtual display to the display of the first electronic device for displaying.

In some embodiments, the first electronic device may display the user interface on the display by using the following steps:
A1: The first electronic device creates a native window. The native window is used to display the user interface of the application on the display of the first electronic device.

After creating the first virtual display, the projection module of the first electronic device may further send the identification information of the first virtual display to the simultaneous multi-screen viewing module.

After receiving the identification information of the first virtual display, the simultaneous multi-screen viewing module may determine, based on the mapping relationship between the identification information of the first virtual display and the application, the first virtual display on which the user interface of the application is generated.

Optionally, after receiving the identification information of the first virtual display on which the user interface of the application is generated, the simultaneous multi-screen viewing module creates the native window that is used to display the user interface of the application on the display of the first electronic device. That is, the simultaneous multi-screen viewing module establishes a binding relationship between the identification information of the first virtual display and the created native window.

A2: The first electronic device copies the user interface generated on the first virtual display to the native window, and displays the user interface in the native window.

In some embodiments, the first electronic device may perform layer copying on the user interface generated on the first virtual display, to obtain the layer data of the user interface.

The simultaneous multi-screen viewing module of the first electronic device may determine the identification information that is of the first virtual display and that has the mapping relationship with the application that needs to be projected; and perform, based on the identification information of the first virtual display, layer copying on the user interface generated on the first virtual display, to obtain the layer data of the user interface. The identification information includes an ID of the first virtual display.

The simultaneous multi-screen viewing module may further copy the obtained layer data to surfaceview of the native window and display the user interface of the application in the native window.

The simultaneous multi-screen viewing module of the first electronic device may further perform layer synthesis on the layer data to obtain the image data. The simultaneous multi-screen viewing module of the first electronic device may display the user interface in the native window based on the image data.

In this embodiment of this application, steps S402 and S403 are not performed in a specific sequence, and the first electronic device simultaneously performing steps S402 and S403 can implement simultaneous multi-screen viewing on the first electronic device and the second electronic device.

When the first electronic device and the second electronic device display the user interface, the first electronic device may suspend updating of the user interface. In other words, the user interface displayed by the first electronic device and the second electronic device is a user interface applied when the user triggers the projection operation. The user may perform an operation on the user interface of the display of the first electronic device, to update the user interface of the application. In addition, the user may perform an operation on the user interface of a display of the second electronic device, to update the user interface of the application. In this way, the first electronic device generates a new user interface on the first virtual display, copies the updated user interface to the display of the first electronic device for displaying, and projects the updated user interface onto the second electronic device for displaying. For example, the application is a video application. FIG. 5 is used as an example. When the user shares the video application to the in-vehicle PAD, the head unit device 31 projects the video application onto the in-vehicle PAD, and the in-vehicle PAD displays a user interface of the video application in a projection window. The user interface of the video is displayed in a native window of the head unit device 31. When displaying the user interface of the video application, the head unit device 31 and the in-vehicle PAD 32 do not play the user interface of the video application. The user may tap the user interface on the head unit device 31 or a display of the in-vehicle PAD 32 to play the video application. In this way, the head unit device 31 and the in-vehicle PAD 32 may play the user interface of the video application.

As shown in FIG. 10, the first electronic device may copy the user interface generated on the first virtual display to the display of the first electronic device for displaying. In addition, the first electronic device may send, to the second electronic device, the projection data that is included on the user interface generated on the first virtual display. In this way, when performing different-source projection, the first electronic device can synchronously display the projected user interface locally. The user interface of the first virtual display is not actually displayed.

In this embodiment of this application, although the second electronic device displays the user interface slower than the first electronic device, a playing delay of the second electronic device relative to the first electronic device is small (for example, less than 75 ms), and a time difference is within an acceptable range, meeting a simultaneous viewing standard. Therefore, it may be considered that the projection method provided in this embodiment of this application can implement a requirement that the first electronic device and the second electronic device simultaneously play the user interface. In this way, in this embodiment of this application, when the first electronic device projects the application onto the second electronic device, the first electronic device and the second electronic device simultaneously display the user interface of the application, thereby resolving a problem that local displaying cannot be implemented during different-source projection.

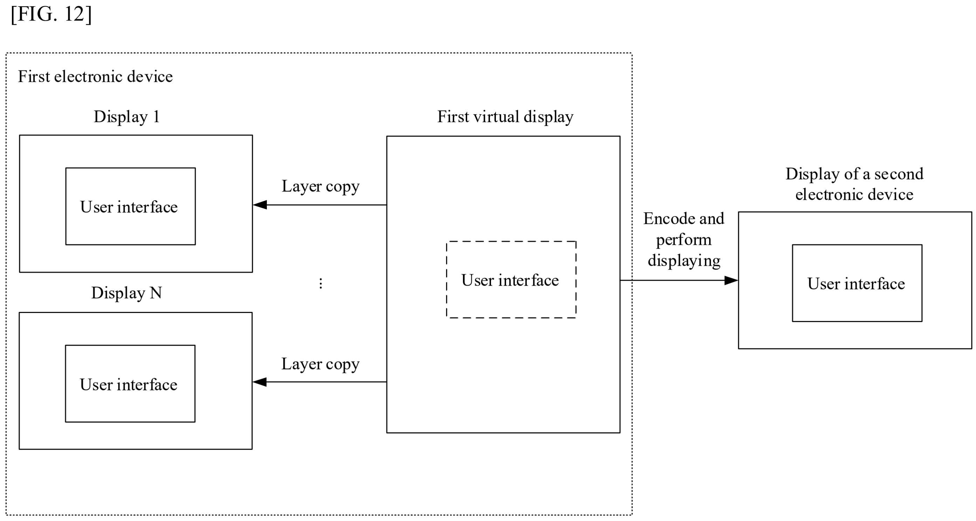

In some embodiments, the first electronic device may further include a plurality of displays: a display 1, ..., and a display N. The first electronic device creates the first virtual display in response to the projection operation triggered by the user for the application. As shown in FIG. 12, the first electronic device migrates the application to the first virtual display, and generates the user interface of the application on the first virtual display. The first electronic device encodes the user interface generated on the first virtual display and performs displaying on the second electronic device, so that the user interface of the application is displayed on the display of the second electronic device. In addition, the first electronic device may copy the user interface generated on the first virtual display to the display 1, ..., and the display N of the first electronic device for displaying. In this way, the user interface of the application may be synchronously displayed on the display 1, ..., and the display N, and the display of the second electronic device. The user interface of the first virtual display is not actually displayed.

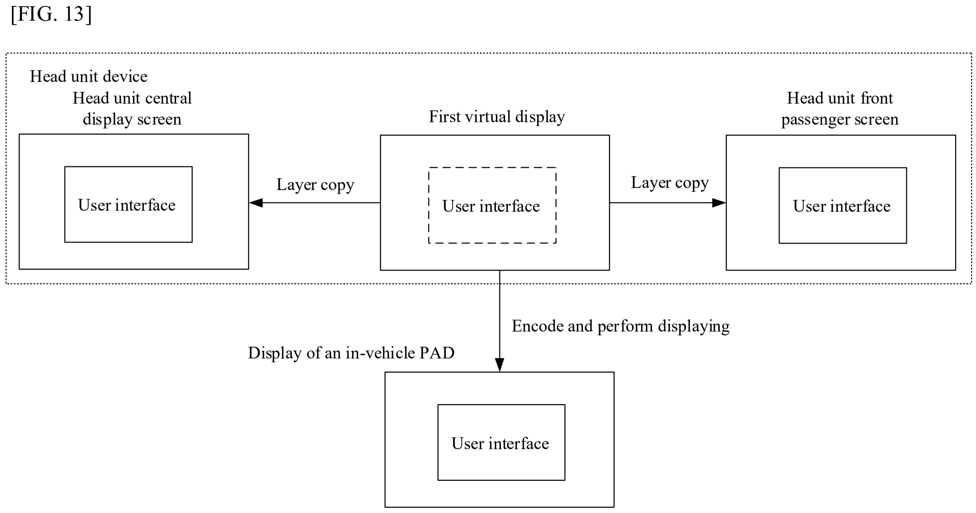

For example, the first electronic device may be a head unit device, and a display of the head unit device includes a head unit central display screen and a head unit front passenger screen. The second electronic device may be an in-vehicle PAD. As shown in FIG. 13, the head unit device may create the first virtual display in response to a simultaneous multi-screen viewing operation triggered by the user, migrate the application from the head unit central display screen to the first virtual display, and run the application on the first virtual display, to generate the user interface of the application. The head unit device may encode the user interface generated on the first virtual display, and perform displaying on the in-vehicle PAD, so that the user interface is displayed on a display of the in-vehicle PAD. In addition, the head unit device may copy the user interface generated on the first virtual display to the head unit central display screen and the head unit front passenger screen for displaying. In this way, the head unit central display screen, the head unit front passenger screen, and the in-vehicle PAD can synchronously display the user interface, to implement simultaneous multi-screen viewing. The user interface of the first virtual display is not actually displayed.

In some embodiments, the user may further share an application of the first electronic device to a plurality of second electronic devices, to implement simultaneous multi-screen viewing. The first electronic device obtains the layer data of the user interface of the application generated on the first virtual display, and performs layer synthesis on the layer data to obtain the image data. The first electronic device may copy the image data to the display of the first electronic device for displaying. In addition, the first electronic device may encode the image data to obtain the projection data, and send the projection data to the plurality of second electronic devices through the network. Each of the plurality of second electronic devices may decode the received projection data, to obtain the image data. In addition, each second electronic device may display the user interface in the projection window based on the image data.

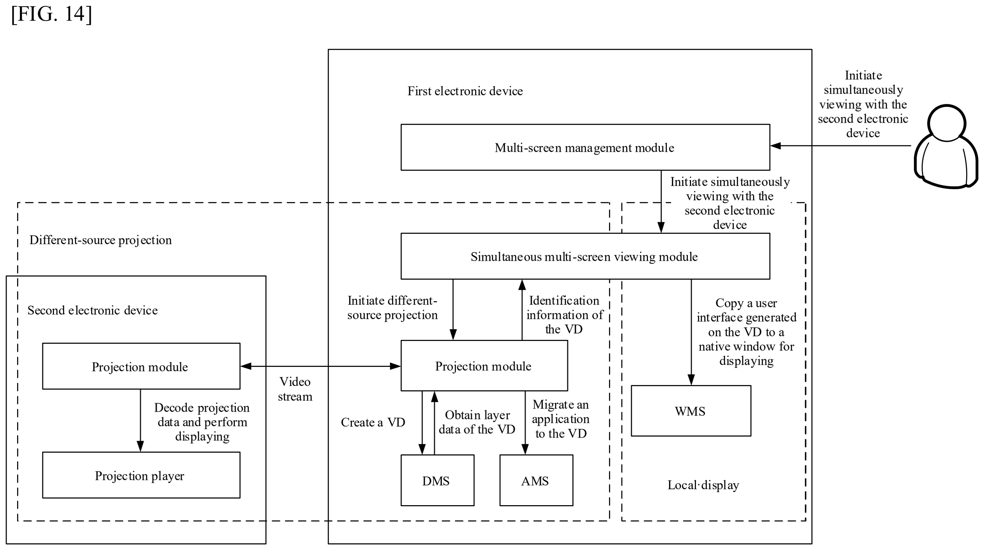

Based on the content described in the foregoing embodiments, an embodiment of this application provides a possible projection system. FIG. 14 is a diagram of an architecture of a projection system according to an embodiment of this application. The system includes a first electronic device and a second electronic device, where the first electronic device and the second electronic device are located in a distributed multi-device environment. A communication link may be established between the first electronic device and the second electronic device in a wireless or wired manner, to form the distributed multi-device environment. For example, the first electronic device and the second electronic device may establish a Bluetooth link in a Bluetooth manner, or establish a Wi-Fi communication link in a Wi-Fi manner, or may establish a connection through a wired link.

An operating system of the first electronic device may include a multi-screen management module, a simultaneous multi-screen viewing module, and a projection module. The second electronic device may include a projection module and a projection player.

In some embodiments, the first electronic device and the second electronic device may exchange projection data by using their respective projection modules, to form the projection system in the multi-device environment.

As shown in FIG. 14, the multi-screen management module of the first electronic device detects a simultaneous multi-screen viewing operation triggered by a user, and determines an application for simultaneous multi-screen viewing and the second electronic device. The multi-screen management module initiates, to the simultaneous multi-screen viewing module, an instruction for simultaneously viewing with the second electronic device, and the simultaneous multi-screen viewing module initiates, based on the instruction sent by the multi-screen management module, different-source projection by using the projection module. When the simultaneous multi-screen viewing module initiates different-source projection, the projection module can respond to the projection operation, control a DMS to create a VD, and migrate the application to the VD through an AMS. The first electronic device generates a user interface of the application on the VD. The projection module of the first electronic device returns identification information of the created VD to the simultaneous multi-screen viewing module. After returning the identification information of the VD to the simultaneous multi-screen viewing module, the projection module of the first electronic device may further establish a Wi-Fi connection to the second electronic device by using a Wi-Fi module.

After the second electronic device establishes the connection to the first electronic device, the projection module of the second electronic device starts the projection player. After the projection player is started, a projection window is created. The projection window is used to display a user interface projected by the first electronic device onto the second electronic device.

The projection module of the first electronic device obtains, through the DMS, layer data of the application on the VD, and performs layer synthesis on the layer data to obtain image data. The projection module of the first electronic device encodes the image data to obtain the projection data. The projection module of the first electronic device transmits the projection data to the projection module of the second electronic device through the Wi-Fi connection. The projection module of the second electronic device decodes the projection data to obtain the image data. The second electronic device sends the image data to the projection player, and the projection player displays the user interface in a projection window of a display of the second electronic device.

After receiving the identification information, the simultaneous multi-screen viewing module of the first electronic device may create a native window, where the native window is used to display the user interface on a display of the first electronic device. The simultaneous multi-screen viewing module may perform, based on the identification information, layer copying on the user interface generated on the VD, to obtain the image data of the user interface. The simultaneous multi-screen viewing module may further copy the obtained layer data to surfaceview of the native window. The simultaneous multi-screen viewing module may further perform layer synthesis on the layer data to obtain the image data, and display the user interface in the native window based on the image data.

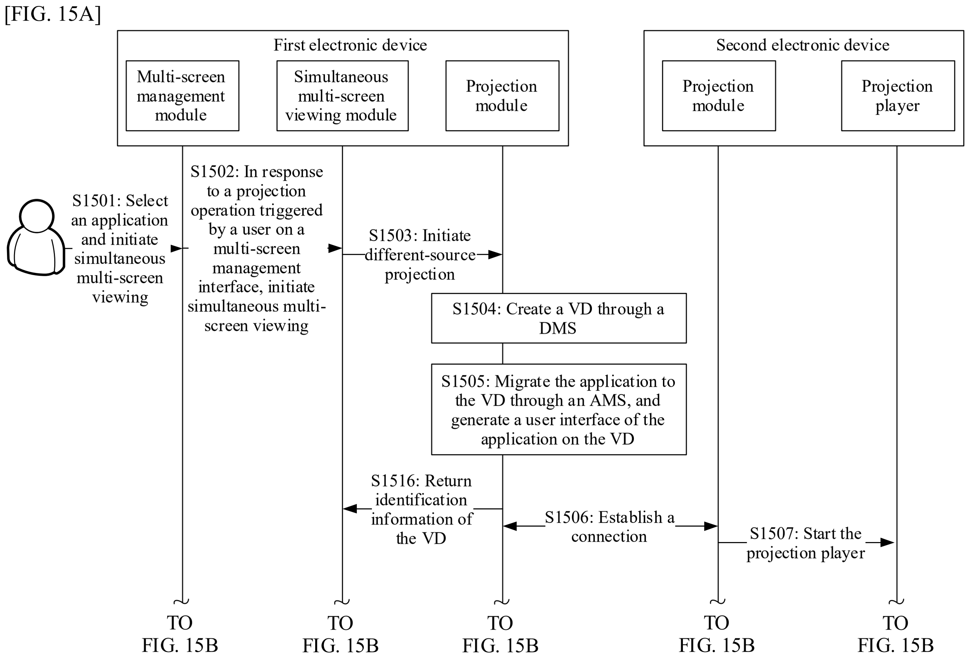

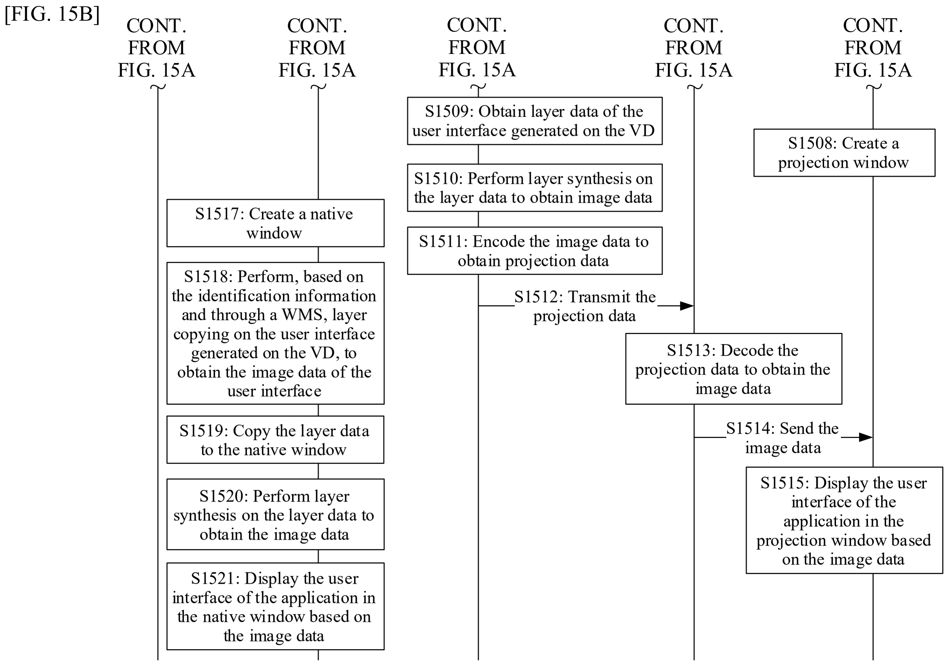

FIG. 15A and FIG. 15B are an example of a projection method according to an embodiment of this application. The example includes the following steps.

S1501: A user may select an application on a multi-screen management interface of a first electronic device and initiate simultaneous multi-screen viewing.

S1502: In response to the simultaneous multi-screen viewing operation initiated by the user, a multi-screen management module of the first electronic device may initiate simultaneous multi-screen viewing by using a simultaneous multi-screen viewing module.

S1503: The simultaneous multi-screen viewing module of the first electronic device initiates different-source projection by using a projection module of the first electronic device.

S1504: In response to a projection operation, the projection module of the first electronic device may create a VD through a DSM.

S1505: The projection module of the first electronic device may migrate the application to the VD through an AMS, and generate a user interface of the application on the VD.

S1506: The projection module of the first electronic device establishes a connection to a projection module of a second electronic device.

S1507: The projection module of the second electronic device starts a projection player.

S1508: The projection player creates a projection window.

The projection module of the second electronic device creates surfaceview of the projection window.

S1509: The projection module of the first electronic device obtains layer data of the user interface generated on the VD.

Step S1507 and step S1509 are not performed in a specific sequence.

S1510: The projection module of the first electronic device performs image synthesis on the layer data to obtain image data.

S1511: The projection module of the first electronic device encodes the image data to obtain projection data.

S1512: The projection module of the first electronic device may transmit the projection data to the projection module of the second electronic device.

S1513: The projection module of the second electronic device decodes the projection data to obtain the image data.

S1514: The projection module of the second electronic device sends the image data to the projection player of the second electronic device.

S1515: The projection player of the second electronic device displays the user interface of the application in the projection window based on the image data.

After performing step S1505, the first electronic device may further perform step S1516. That is, step S1516 and step S1506 are not performed in a specific sequence.

S1516: The projection module of the first electronic device returns identification information of the VD to the simultaneous multi-screen viewing module.

After creating the VD, the projection module of the first electronic device may further generate the identification information of the VD. The first electronic device may further establish a mapping relationship between the identification information of the VD and the application.

S1517: After receiving the identification information of the VD, the simultaneous multi-screen viewing module of the first electronic device creates a native window, where the native window is used to display the user interface on a display of the first electronic device.

S1518: The simultaneous multi-screen viewing module of the first electronic device performs, based on the identification information and through a WMS, layer copying on the user interface generated on the VD, to obtain the layer data of the user interface.

In some embodiments, the simultaneous multi-screen viewing module of the first electronic device determines, based on the mapping relationship between the identification information and the application, the VD on which the user interface of the application is generated. The simultaneous multi-screen viewing module uses the WMS to copy a layer of the user interface generated on the VD, to obtain the layer data of the user interface.

S1519: The simultaneous multi-screen viewing module of the first electronic device may further copy the obtained layer data to the native window.

For example, the simultaneous multi-screen viewing module of the first electronic device may further copy the obtained layer data to surfaceview of the native window.

S1520: The simultaneous multi-screen viewing module of the first electronic device may perform layer synthesis on the layer data to obtain image data.

S1521: The simultaneous multi-screen viewing module of the first electronic device may further display the user interface of the application in the native window based on the obtained image data.

Based on the content shown in FIG. 15A and FIG. 15B, the multi-screen management module of the first electronic device may determine the first electronic device and the second electronic device that display the user interface of the application. The simultaneous multi-screen viewing module of the first electronic device may copy the user interface generated on the VD to the display of the first electronic device for displaying. In addition, the projection module of the first electronic device may create the VD to implement different-source projection on the second electronic device. In addition, in a process of completing different-source projection and layer copying, the first electronic device creates only one VD, so that power consumption of simultaneous multi-screen viewing is reduced when simultaneous multi-screen viewing is implemented.

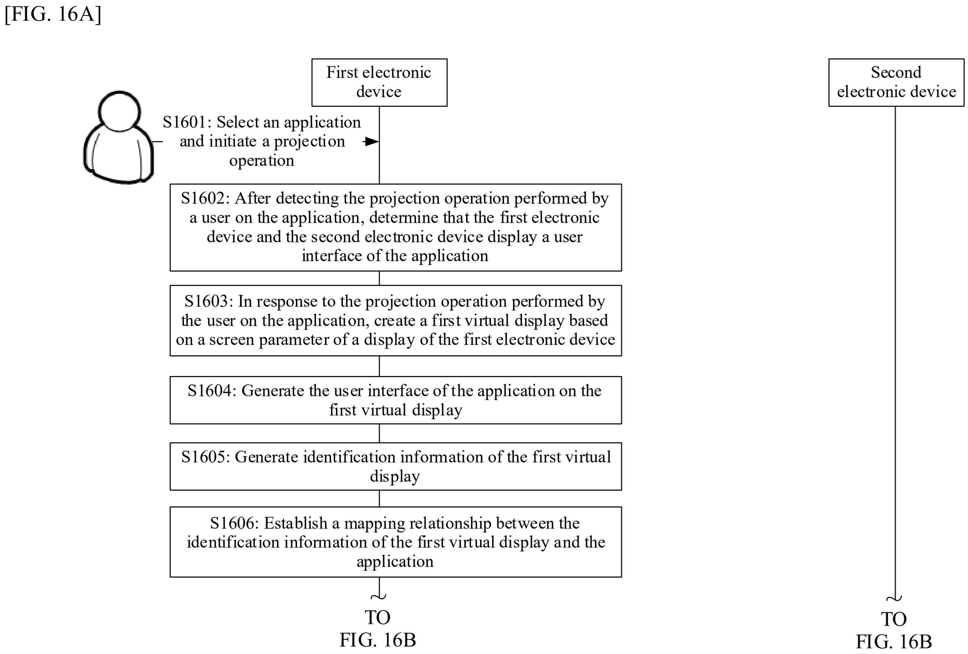

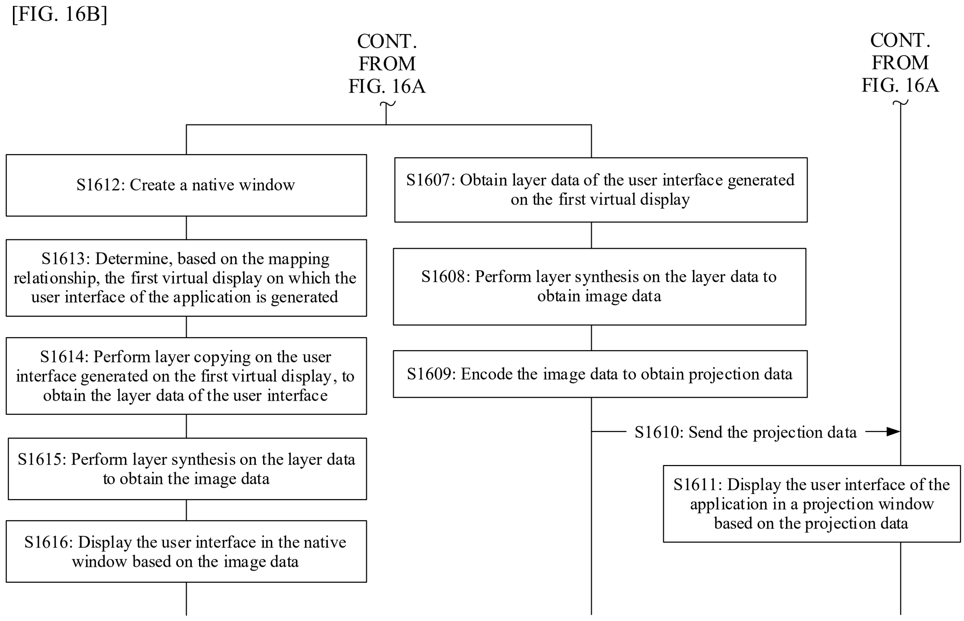

FIG. 16A and FIG. 16B are a complete schematic flowchart of a projection method according to this application. As shown in FIG. 16A and FIG. 16B, the method includes the following steps.

S1601: A user selects an application on a display of a first electronic device and initiates a projection operation.

S1602: After detecting the projection operation performed by the user on the application, the first electronic device determines that the first electronic device and a second electronic device display a user interface of the application.

S1603: In response to the projection operation performed by the user on the application, the first electronic device creates a first virtual display based on a screen parameter of the display of the first electronic device.

S1604: The first electronic device generates the user interface of the application on the first virtual display.

For example, after creating the first virtual display, the first electronic device migrates the application to the first virtual display, and generates the user interface on the first virtual display.

S1605: The first electronic device generates identification information of the first virtual display.

S1606: The first electronic device establishes a mapping relationship between the identification information of the first virtual display and the application.

S1607: The first electronic device obtains layer data of the user interface generated on the first virtual display.

S1608: The first electronic device performs layer synthesis on the layer data to obtain image data.

S1609: The first electronic device encodes the image data to obtain projection data.

The projection data is used by the second electronic device to display the user interface of the application in a projection window.

S1610: The first electronic device sends the projection data to the second electronic device.

In some embodiments, after creating the first virtual display, the first electronic device establishes a connection to the second electronic device. The second electronic device creates the projection window on a display, to display the user interface.

S1611: The second electronic device displays the user interface of the application in the projection window based on the projection data.

S1612: The first electronic device creates a native window.

The native window is used to display the user interface of the application on the display of the first electronic device.

Step S1607 and step S1612 are not performed in a specific sequence.

S1613: The first electronic device determines, based on the mapping relationship, the first virtual display on which the user interface of the application is generated.

S1614: The first electronic device performs layer copying on the user interface generated on the first virtual display, to obtain the layer data of the user interface.

S1615: The first electronic device performs layer synthesis on the layer data to obtain the image data.

S1616: The first electronic device displays the user interface in the native window based on the image data.

Based on the content shown in FIG. 16A and FIG. 16B, the first electronic device creates the first virtual display, and generates, on the first virtual display, the user interface of the projected application. When performing synthetic encoding on the user interface of the first virtual display and performing displaying on the second electronic device, the first electronic device may further copy the user interface of the first virtual display to the display of the first electronic device for displaying. This can implement simultaneous multi-screen viewing on the first electronic device and the second electronic device, and reduce power consumption of simultaneous multi-screen viewing.

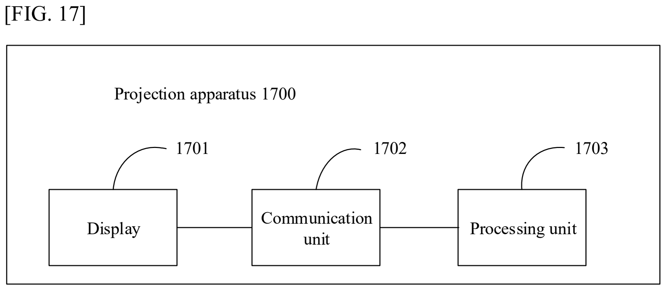

Based on the foregoing content and a same concept, FIG. 17 is a diagram of a possible structure of a projection apparatus 1700 according to this application. The projection apparatus 1700 is used in a projection system including a first electronic device and a second electronic device.

In some embodiments, the first electronic device includes the projection apparatus 1700, or the first electronic device is the projection apparatus 1700. The projection apparatus 1700 may be configured to implement functions of the first electronic device in the method embodiments, and therefore can also achieve beneficial effects of the method embodiments.

A display 1701 is configured to display a user interface.

A communication unit 1702 is configured to: receive and send data.

A processing unit 1703 is configured to: create a first virtual display in response to a projection operation performed by a user on an application, and generate a user interface of the application on the first virtual display; send projection data to the second electronic device, where the projection data is included on the user interface that is of the application and that is generated on the first virtual display; and copy the user interface generated on the first virtual display to the display 1701 of the first electronic device for displaying.

In an optional implementation, the processing unit 1703 is specifically configured to:
in response to the projection operation, create the first virtual display based on a screen parameter of the display 1701 of the first electronic device.

In an optional implementation, the processing unit 1703 is further configured to:
generate identification information of the first virtual display; and
establishing a mapping relationship between the identification information of the first virtual display and the application.

In an optional implementation, the processing unit 1703 is specifically configured to:
generate the projection data based on the user interface generated on the first virtual display, where the projection data is used by the second electronic device to display the user interface of the application in a projection window; and
send the projection data to the second electronic device.

In an optional implementation, the processing unit 1703 is specifically configured to:
obtain layer data of the user interface generated on the first virtual display;
perform layer synthesis on the layer data to obtain image data; and
encode the image data to obtain the projection data.

In an optional implementation, the processing unit 1703 is specifically configured to:
create a native window, where the native window is used to display the user interface of the application on the display 1701 of the first electronic device; and
copy the user interface generated on the first virtual display to the native window, and display the user interface in the native window.

In an optional implementation, after creating the native window, the processing unit 1703 is further configured to:
determine, based on the mapping relationship between the identification information of the first virtual display and the application, the first virtual display on which the user interface of the application is generated.

In an optional implementation, the processing unit 1703 is specifically configured to:
perform layer copying on the user interface generated on the first virtual display, to obtain the layer data of the user interface;
perform layer synthesis on the layer data to obtain the image data; and
display the user interface in the native window based on the image data.

In an optional implementation, the processing unit 1703 is further configured to:
after detecting the projection operation triggered by the user for the application, determine that the first electronic device and the second electronic device display the user interface of the application.

Based on the foregoing content and a same concept, this application provides an electronic device, including a display, a processor, and a memory. The display is configured to display a user interface, the memory is configured to store a computer program, and the processor is configured to execute the computer program stored in the memory, to cause the electronic device to perform the steps performed by the first electronic device in the foregoing method embodiments.

Based on the foregoing content and a same concept, this application provides a computer-readable storage medium. The computer-readable storage medium stores a computer program or instructions, and when the computer program or the instructions are executed by a compute device, the compute device performs the steps performed by the first electronic device in the foregoing method embodiments.

Based on the foregoing content and a same concept, this application provides a computer program product. The computer program product includes a computer program or instructions, and when the computer program or the instructions are executed by a compute device, the compute device performs the steps performed by the first electronic device in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the protection scope defined by the following claims and their equivalent technologies.

## Claims

1. A projection method, applied to a projection system, wherein the projection system comprises the first electronic device and a second electronic device, and the method comprises:
creating, by the first electronic device, a first virtual display in response to a projection operation performed by a user on an application, and generating a user interface of the application on the first virtual display;
sending, by the first electronic device, projection data to the second electronic device, wherein the projection data is comprised on the user interface that is of the application and that is generated on the first virtual display; and
copying, by the first electronic device, the user interface generated on the first virtual display to a display of the first electronic device for displaying.

2. The method according to claim 1, wherein creating, by the first electronic device, the first virtual display in response to the projection operation performed by the user on the application comprises:
in response to the projection operation, creating, by the first electronic device, the first virtual display based on a screen parameter of the display of the first electronic device.

3. The method according to claim 1 or 2, wherein the method further comprises:
generating, by the first electronic device, identification information of the first virtual display; and
establishing, by the first electronic device, a mapping relationship between the identification information of the first virtual display and the application.

4. The method according to any one of claims 1 to 3, wherein sending, by the first electronic device, the projection data to the second electronic device comprises:
generating, by the first electronic device, the projection data based on the user interface generated on the first virtual display, wherein the projection data is used by the second electronic device to display the user interface of the application in a projection window; and
sending, by the first electronic device, the projection data to the second electronic device.

5. The method according to claim 4, wherein generating, by the first electronic device, the projection data based on the user interface generated on the first virtual display comprises:
obtaining, by the first electronic device, layer data of the user interface generated on the first virtual display;
performing, by the first electronic device, layer synthesis on the layer data to obtain image data; and
encoding, by the first electronic device, the image data to obtain the projection data.

6. The method according to any one of claims 1 to 5, wherein copying, by the first electronic device, the user interface generated on the first virtual display to the display of the first electronic device for displaying comprises:
creating, by the first electronic device, a native window, wherein the native window is used to display the user interface of the application on the display of the first electronic device; and
copying, by the first electronic device, the user interface generated on the first virtual display to the native window, and displaying the user interface in the native window.

7. The method according to claim 6, wherein after creating, by the first electronic device, the native window, the method further comprises:
determining, by the first electronic device based on the mapping relationship between the identification information of the first virtual display and the application, the first virtual display on which the user interface of the application is generated.

8. The method according to claim 7, wherein copying, by the first electronic device, the user interface generated on the first virtual display to the native window, and displaying the user interface in the native window comprises:
performing, by the first electronic device, layer copying on the user interface generated on the first virtual display, to obtain the layer data of the user interface;
performing, by the first electronic device, layer synthesis on the layer data to obtain the image data; and
displaying, by the first electronic device, the user interface in the native window based on the image data.

9. The method according to any one of claims 1 to 8, wherein the method further comprises:
after detecting the projection operation triggered by the user for the application, determining, by the first electronic device, that the first electronic device and the second electronic device display the user interface of the application.

10. A projection apparatus, used in a first electronic device in a projection system, wherein the apparatus comprises:
a display, configured to display a user interface;
a communication unit, configured to: receive and send data; and
a processing unit, configured to: create a first virtual display in response to a projection operation performed by a user on an application, and generate a user interface of the application on the first virtual display; send projection data to the second electronic device, wherein the projection data is comprised on the user interface that is of the application and that is generated on the first virtual display;
and copy the user interface generated on the first virtual display to the display of the first electronic device for displaying.

11. The apparatus according to claim 10, wherein the processing unit is specifically configured to:
in response to the projection operation, create the first virtual display based on a screen parameter of the display of the first electronic device.

12. The apparatus according to claim 10 or 11, wherein the processing unit is further configured to:
generate identification information of the first virtual display; and
establishing a mapping relationship between the identification information of the first virtual display and the application.

13. The apparatus according to any one of claims 10 to 12, wherein the processing unit is specifically configured to:
generate the projection data based on the user interface generated on the first virtual display, wherein the projection data is used by the second electronic device to display the user interface of the application in a projection window; and
send the projection data to the second electronic device.

14. The apparatus according to claim 13, wherein the processing unit is specifically configured to:
obtain layer data of the user interface generated on the first virtual display;
perform layer synthesis on the layer data to obtain image data; and
encode the image data to obtain the projection data.

15. The apparatus according to any one of claims 10 to 14, wherein the processing unit is specifically configured to:
create a native window, wherein the native window is used to display the user interface of the application on the display of the first electronic device; and
copy the user interface generated on the first virtual display to the native window, and display the user interface in the native window.

16. The apparatus according to claim 15, wherein after creating the native window, the processing unit is further configured to:
determine, based on the mapping relationship between the identification information of the first virtual display and the application, the first virtual display on which the user interface of the application is generated.

17. The apparatus according to claim 16, wherein the processing unit is specifically configured to:
perform layer copying on the user interface generated on the first virtual display, to obtain the layer data of the user interface;
perform layer synthesis on the layer data to obtain the image data; and
display the user interface in the native window based on the image data.

18. The apparatus according to any one of claims 10 to 17, wherein the processing unit is further configured to:
after detecting the projection operation triggered by the user for the application, determine that the first electronic device and the second electronic device display the user interface of the application.

19. An electronic device, comprising a display, one or more processors, and one or more memories, wherein
the display is configured to display a user interface;
the one or more memories are configured to store one or more computer programs and data information, and the one or more computer programs comprise instructions; and
when the instructions are executed by the one or more processors, the electronic device is caused to perform the method according to any one of claims 1 to 9.

20. A chip, wherein the chip is coupled to a memory in an electronic device, so that when the chip runs, a computer program stored in the memory is invoked to implement the method according to any one of claims 1 to 9.

21. A computer storage medium, wherein the computer-readable storage medium comprises a computer program, and when the computer program is run on the electronic device, the electronic device is caused to perform the method according to any one of claims 1 to 9.

22. A computer program product, wherein when the computer program product runs on a computer, the computer is caused to perform the method according to any one of claims 1 to 9.
